Europäisches Patentamt

European Patent Office

Office européen des brevets

(11) Publication number: **0 422 804 A2**

# EUROPEAN PATENT APPLICATION

(21) Application number: 90310667.2

(22) Date of filing: 28.09.90

(51) Int. Cl.⁵: **C08F 8/00, C08F 8/36, C08F 8/32**

(30) Priority: 29.09.89 US 414838
06.08.90 US 562985

(43) Date of publication of application:
17.04.91 Bulletin 91/16

(84) Designated Contracting States:
DE FR GB IT NL

(71) Applicant: **E.I. DU PONT DE NEMOURS AND COMPANY**
**1007 Market Street**
**Wilmington Delaware 19898(US)**

(72) Inventor: **Brugel, Edward Gus**
**2524 Eaton Road**
**Wilmington, Delaware 19803(US)**

(74) Representative: **Jones, Alan John et al**
**CARPMAELS & RANSFORD 43 Bloomsbury Square**
**London, WC1A 2RA(GB)**

(54) Process for crosslinking chlorosulfonated olefin polymers.

(57) A process for crosslinking a chlorosulfonated olefin polymer which comprises contacting:
a) a chlorosulfonated olefin polymer having a chlorine content of about 20-60% by weight and a sulfur content of about 0.5-10% by weight; with
b) a compound selected from the group consisting of polyols, polyamines, and mixtures thereof, wherein the equivalent ratio of the compound to sulfur present in the chlorosulfonated olefin polymer is from 0.1:1 to 1:1 and the compound has an equivalent weight up to 1,000; with the proviso that when b) is a polyol alone, 0.1-2 equivalents, per equivalent of sulfur present in the chlorosulfonated olefin polymer, of a tertiary amine is additionally present;
is disclosed as well as a process for making the same.

EP 0 422 804 A2

## PROCESS FOR CROSSLINKING CHLOROSULFONATED OLEFIN POLYMERS

### BACKGROUND OF THE INVENTION

This invention relates to a process for curing chlorosulfonated olefin polymers and to novel crosslinked chlorosulfonated olefin polymer compositions prepared by said process.

Chlorosulfonated olefin polymers, especially chlorosulfonated polyethylene, are well-known elastomers and resins. Due to the high level of chlorine which is present on the polymer backbone these polymers exhibit superior acid, base, and solvent resistance, as well as a high degree of flexibility, ozone resistance, and weatherability. These properties, in combination with the presence of chlorosulfonyl cure sites, have made them particularly useful as thermoset elastomers, adhesives, binders for coating compositions and roofing membranes.

The cure systems for chlorosulfonated olefin polymers have been based on both organic and inorganic crosslinking agents. The inorganic systems typically rely on metal oxides or sulfur, while the organic cures are based on sulfur-containing organic compounds, maleimides, or organic peroxides. In most cases elevated temperatures are required to effect cure, and in those cases where ambient temperatures can be used, the cure rate is such that long periods of time, typically weeks, are required for cure to be complete.

It has now been found that cured chlorosulfonated olefin polymers compositions can be obtained at ambient temperatures using short cure times when the raw polymers are reacted with polyols or polyamines in a ratio such that the number of equivalents of sulfur in the chlorosulfonated olefin polymer to the number of equivalents of polyol or polyamine is equal to or less than 1:1. U.S. Patent 2,723,255 discloses reaction products of chlorosulfonated polyethylene with ethylene glycol. However, the ratio of polymer to diol is such that stable compositions are not obtained nor would the reaction conditions lead to a practical cure system.

### SUMMARY OF THE INVENTION

This invention is directed to a process for preparing cured chlorosulfonated olefin polymer compositions having sulfonamide or sulfonate ester crosslinks and to compositions prepared using said process.

More specifically this invention is directed to a process for crosslinking a chlorosulfonated olefin polymer which comprises contacting:

a) a chlorosulfonated olefin polymer having a chlorine content of about 20-60% by weight and a sulfur content of about 0.5-10% by weight; with

b) a compound selected from the group consisting of polyols, polyamines, and mixtures thereof, wherein the equivalent ratio of the compound to sulfur present in the chlorosulfonated olefin polymer is from 0.1:1 to 1:1 and the compound has an equivalent weight up to 1,000; with the proviso that when b) is a polyol alone, 0.1-2 equivalents, per equivalent of sulfur present in the chlorosulfonated olefin polymer, of a tertiary amine is additionally present.

In the above embodiment of the process of the invention the polymer and curing agent are each present at the initiation of the reaction. In another embodiment of the invention a partially sulfonated or sulfonamidated chlorosulfonated olefin polymer derivative is formed by pre-reaction of the chlorosulfonated olefin polymer. Then this intermediate is subsequently cured. In this latter case a portion of the reactive sulfonyl chloride groups of the chlorosulfonated olefin polymer are derivatized or prereacted with a compound selected from the group consisting of monohydric alcohols and primary or secondary amines. The resultant chlorosulfonated olefin polymer is then cured by contacting it with polyol or polyamine. The amount of derivatizing agent may range from about 0.1 to about 1 equivalents, per equivalent of sulfur present in the chlorosulfonated olefin polymer. Use of monohydric alcohols in excess, to act as both solvent and reactant, is also contemplated by the invention. Under such circumstances, wherein more than one equivalent of monohydric alcohol derivatizing agent is present per equivalent of sulfur in the chlorosulfonated polyolefin, the final reaction with polyol or polyamine is a transesterification or a transamidation. When polyols alone, rather than a mixture of polyol and polyamine, are used as the crosslinking agent in this embodiment, a tertiary amine is present in amounts of 0.1-2 equivalents per equivalent of sulfur present in the chlorosulfonated olefin polymer. The use of tertiary amines is optional when polyamines or polyamine/polyol mixtures are used as crosslinking agents.

Cured chlorosulfonated olefin polymer compositions are thus produced which contain sulfonate or sulfonamide linkages. Consequently, the invention is also directed to a cured chlorosulfonated olefin polymer composition comprising the reaction product of:

a) a chlorosulfonated olefin polymer having a chlorine content of about 20-60% by weight and a sulfur content of 0.5-10% by weight; and

b) a compound selected from the group consisting of polyols and polyamines, and mixtures thereof, wherein the equivalent ratio of the compound to sulfur present in the chlorosulfonated olefin polymer is from 0.1:1 to 1:1, and the compound has an equivalent weight up to 1,000.

The process of the invention provides a fast, ambient temperature cure which leads to production of novel crosslinked chlorosulfonated olefin polymer compositions which maintain the desirable properties of chlorosulfonated olefin polymers cured using traditional methods.

## DETAILED DESCRIPTION OF THE INVENTION

The term chlorosulfonated olefin polymer as used herein means those chlorosulfonated olefin polymers which contain chlorine in amounts ranging from 20-60 weight % and sulfur in amounts ranging from 0.5-10 weight %, based on the weight of the chlorosulfonated olefin polymer. The chlorosulfonated olefin polymers may be selected from the group consisting of chlorosulfonated homopolymers of $C_2$-$C_8$ alpha monoolefins and chlorosulfonated copolymers of ethylene and at least one ethylenically unsaturated monomer selected from the group consisting of $C_3$-$C_{10}$ alpha monoolefins, $C_1$-$C_{12}$ alkyl esters of unsaturated $C_3$-$C_{20}$ monocarboxylic acids, unsaturated $C_3$-$C_{20}$ mono-or dicarboxylic acids, vinyl esters of saturated $C_2$-$C_{18}$ carboxylic acids, and carbon monoxide. These chlorosulfonated olefin polymers include chlorosulfonated polyethylene, chlorosulfonated polypropylene, chlorosulfonated ethylene/vinyl acetate copolymers, chlorosulfonated ethylene acrylic acid copolymers, chlorosulfonated ethylene methacrylic acid copolymers, chlorosulfonated ethylene methyl acrylate copolymers, chlorosulfonated methyl methacrylate copolymers, chlorosulfonated ethylene n-butyl methacrylate copolymers, chlorosulfonated ethylene glycidyl methacrylate copolymers, and chlorosulfonated copolymers of ethylene with propylene, butene, 3-methyl-1-pentene, or octene. Preferred chlorosulfonated olefin polymers are chlorosulfonated polyethylene and chlorosulfonated copolymers of ethylene and vinyl acetate.

The chlorosulfonated olefin polymers have average molecular weights within the range of 1,000 to 300,000. Those chlorosulfonated olefin polymers having average molecular weights of 1,000-50,000 are suitable for preparation of crosslinked polymers for high solids coating applications, with the preferred average molecular weight being 1,000 to 5,000. Chlorosulfonated polyolefins having average molecular weights in the range of 50,000 to 300,000 are most suitable for preparation of crosslinked polymers for adhesive and thermoset applications, with the preferred average molecular weight being 75,000 to 150,000.

The chlorosulfonated olefin polymers used to prepare the crosslinked polymers of the invention may themselves be prepared by reacting an alpha monoolefin with a chlorosulfonating agent at temperatures of about 80-100°C, usually in the presence of a free radical initiator and an inert solvent. A typical chlorosulfonating agent is sulfonyl chloride and a typical initiator is 2,2'-azobis(2-methylpropane nitrile). Various chlorosulfonated olefin polymers and methods for their preparation are discussed, for example, in U.S. Patent Numbers 2,586,363 and 3,296,222 and in European Patent Application 0163970 which are incorporated herein by reference.

The polyols used in the present invention have equivalent weights up to about 1,000 and have at least two hydroxyl groups per molecule. They can be selected from the classes of polyols based on polyester, and polyacrylic or polyether resins, or they may be simple monomeric polyols. The polyether polyols are prepared by known methods by the reaction of aliphatic diols and triols, such as ethylene glycol, propylene glycol, trimethylolpropane and the like with a polyhydric initiator. The polyester polyols used in the present invention can be formed by reacting a polycarboxylic acid with a polyhydric compound, such as a diol or triol. The polycarboxylic acids include adipic acid, glutaric acid, succinic acid, pimelic acid, oxalic acid, malonic acid, suberic acid, azelaic acid, maleic acid and the like. The polyhydric alcohols include various diols and triols such as ethylene glycol, 1,2-propylene glycol, 1,3-propylene glycol, butanediols, pentanediols, trimethylolpropane and the like. The polyacrylic polyols can be formed by the reaction of polyacrylic acids with various diols and triols such as ethylene glycol, 1,2-propylene glycol, 1,3-propylene glycol, butanediols, pentanediols, trimethylolpropane and the like. The simple monomeric polyols such as ethylene glycol, propylene glycol, butanediols, triethanolamine and diethanolamine are preferred crosslinking agents because they produce cured chlorosulfonated olefin polymers having the greatest percentage by weight of olefin polymer segments in the final product. Also preferred in the present invention are polyols having an equivalent weight less than 500.

The term polyamine as used herein means those aliphatic and aromatic amines having two or more primary or secondary amino functionalities per molecule. The term as used herein also encompasses those polyamines which have at least two primary or secondary amino moieties and which are formed by condensation reactions of aliphatic or aromatic amines having two or more primary or secondary amino functionalities per molecule with aliphatic or aromatic polycarboxylic acids. Examples of polyamines that can be used to prepare the resin compositions of the present invention include, among others, isophoronediamine, hexamethylenediamine, ethylenediamine, 1,4-cyclohexanebis(methylamine), 1,2-diaminopropane, propylenediamine, diethyl ether diamine, trimethylhexamethylmethylenediamine, methanediamine, 4,4'-methylenebisaniline, triethylenetetramine, diethylaminopropylamine, diethylenetriamine, and N-aminoethylpiperazine. The preferred polyamine is isophoronediamine. Polyamine condensation products that can be used are condensation products of polyamines with aliphatic or aromatic polycarboxylic acids, such as adipic, azelaic, phthalic, isophthalic and succinic. The preferred condensation products are reaction products of isophoronediamine, hexamethylenediamine, ethylenediamine, 1,4-cyclohexanebis(methylamine), 1,2-diaminopropane, propylenediamine, diethyl ether diamine, trimethylhexamethylmethylenediamine, methanediamine, 4,4'-methylenebisaniline, triethylenetetramine, diethylaminopropylamine, diethylenetriamine, and N-aminoethylpiperazine.

The crosslinked chlorosulfonated olefin polymers are prepared by the general procedure of contacting the chlorosulfonated olefin polymer with an amount of polyol, polyamine, or mixture thereof. The preparation is preferably carried out at ambient temperatures and pressures, but elevated temperatures and pressures may be used if desired. The precise conditions will vary, but they can be easily determined by routine experimentation by those skilled in the art. The number of equivalents of polyol, polyamine, or mixture thereof must be equal to or less than the number of equivalents of sulfur present in the chlorosulfonated olefin polymer. This insures that the crosslinking reaction will be complete. The amount of chlorosulfonated olefin polymer present in the reactive composition can be as low as about 20% by weight to accommodate the high molecular weights of some polyols or polyamines. Conversely, the amount of chlorosulfonated olefin polymer present can be as high as 99 weight % when. high molecular weight polyolefins are utilized, since fewer sulfonyl chloride groups are required to assure at least two sulfur groups per molecule. For the same reasons the amount of polyol or polyamine present in the reactive composition can range from about 1% to about 80% by weight. However, in all cases the equivalent ratio of the polyol, polyamine, or mixture thereof to sulfur in the chlorosulfonated olefin polymer will range from 0.1:1 to 1:1.

The chlorosulfonated olefin polymer, and the polyol, polyamine, or mixture thereof may be contacted simultaneously to produce a reactive composition which then crosslinks to form the chlorosulfonated polymer products of the invention. When a polyol alone is used, it is preferred that a tertiary amine be present in amounts of 0.1-2 equivalents per equivalent of sulfur present in the chlorosulfonated olefin polymer, to act as an acid scavenger. The use of the tertiary amine is optional when polyamines or polyol/polyamine mixtures are used as reactants. The process may be run in the absence or in the presence of an inert solvent such as toluene, xylene, methyl ethyl ketone, or methyl isobutyl ketone, or in the melt at elevated temperatures. Heat may be applied to lower the viscosity of the reaction mass in those cases where the use of a solvent is undesirable and the reaction mass is viscous. The tertiary amine component may function as an acid acceptor for the reaction between the chlorosulfonated olefin polymer and the polyol and as the catalyst for the reaction between the polyol or polyamine. Tertiary amines which are preferred for the present invention must be compounds or mixtures of compounds which have a Kb of at least $2 \times 10^{-9}$. Suitable tertiary amines include such compounds as trimethylamine, triethylamine, tributylamine, N-methylmorpholine, N-ethylmorpholine, N-cocomorpholine, and 1,4-diazabicyclo-(2,2,2)octane. The preferred tertiary amines used in the present invention are triethylamine and tributylamine.

In another embodiment of the invention a portion of the chlorosulfonyl groups present in the chlorosulfonated olefin polymer may be pre-reacted with a derivatizing agent prior to reaction with the polyol, polyamine or mixture thereof. Compounds useful for this purpose are primary and secondary monoamines and monohydric alcohols. The primary and secondary amines can be chosen from the classes of aliphatic, alicyclic and aromatic amines which include, for example, methylamine, ethylamine, propylamine, aniline, ethanolamine, diethanolamine, and N-methylethanolamine. The monofunctional alcohol derivatizing agents that can be used can include any aliphatic, alicyclic or aromatic monofunctional alcohol, such as methanol, ethanol, isopropanol, octanol, benzyl alcohol, cyclohexanol, and the like. Generally, about 0.1 to about 1 equivalent of derivatizing agent is used per equivalent of sulfur present in the chlorosulfonated olefin polymer. Following reaction of the derivatizing agent with the chlorosulfonated olefin polymer, the resultant composition is further reacted via a combination of substitution and transesterification or transamidation with one of the above-described polyols or polyamines, or mixtures thereof to form a cured chlorosulfonated olefin polymer composition of the invention. The equivalent ratio of polyol, polyamine, or mixture thereof must range from 0.1:1 to 1:1 in this embodiment to obtain the composition of the invention. Monohydric alcohols may be used in excess in this embodiment to act both as derivatizing agents and as solvents. In this case the reaction of the chlorosulfonated olefin polymer derivative with polyol or polyamine is totally by transesterification or transamidation.

The compositions of the invention are useful for forming coating compositions, adhesives, thermoset resins, membranes, and reaction injection molded compositions.

The examples which follow are submitted to illustrate and not to limit this invention. All parts and percentages are on a weight basis unless otherwise indicated.

Example 1

0.2 g of ethylene glycol (0.0071 equivalents) was mixed with 40g of a 50 weight % solids solution in toluene of chlorosulfonated polyethylene containing 2.6% sulfur (0.0163 equivalents sulfur) and 39% chlorine, prepared from polyethylene having a molecular weight of 30,000. To this mixture was added 0.2g of triethylamine (0.002 equivalents). The viscosity of the mixture increased rapidly and within 15 minutes the resin composition had become too viscous to measure. The mixture was allowed to cure and dry overnight at room temperature. The cured and dried product was elastomeric and suitable for use as an adhesive.

Example 2

0.74 g of isophoronediamine (0.009 equivalents) was mixed with 32 g of a 45 weight% solids solution in toluene of chlorosulfonated polyethylene containing 2.0% sulfur (0.009 equivalents sulfur) and 39% chlorine, prepared from polyethylene having a molecular weight of 30,000. The viscosity of the mixture increased rapidly and within 15 minutes the resin composition had become too viscous to measure. The mixture was allowed to cure and dry overnight at room temperature. The cured and dried product was elastomeric and suitable for use as an adhesive.

Example 3

0.70g of a polyamine having an equivalent weight of 98 (Versamid 150®, available from Henkel Chemical Co., (0.007 equivalents) was mixed with 28g of a 45 weight % solids solution in toluene of chlorosulfonated polyethylene containing 2.0% sulfur (0.008 equivalents sulfur) and 39% chlorine, prepared from a polyethylene having a molecular weight of 30,000. The viscosity of the mixture increased rapidly and within 15 minutes the resin composition had become too viscous to measure. The mixture was allowed to cure and dry overnight at room temperature. The cured and dried material was elastomeric and suitable for use as an adhesive.

Claims

1. A process for crosslinking a chlorosulfonated olefin polymer which comprises contacting:
a) a chlorosulfonated olefin polymer having a chlorine content of about 20-60% by weight and a sulfur content of about 0.5-10% by weight; with
b) a compound selected from the group consisting of polyols, polyamines, and mixtures thereof, wherein the equivalent ratio of the compound to sulfur present in the chlorosulfonated olefin polymer is from 0.1:1 to 1:1 and the compound has an equivalent weight up to 1,000;
with the proviso that when b) is a polyol alone, 0.1-2 equivalents, per equivalent of sulfur present in the chlorosulfonated olefin polymer, of a tertiary amine is additionally present.

2. The process of Claim 1 wherein b) is a polyamine or a polyol/polyamine mixture and 0.1-2 equivalents, per equivalent of sulfur present in the chlorosulfonated olefin polymer, of a tertiary amine is additionally present.

3. The process of Claim 1 or Claim 2 wherein a solvent is additionally present.

4. A process for crosslinking a chlorosulfonated olefin polymer which comprises :
1) preparing a derivative by contacting:
a) a chlorosulfonated olefin polymer having a chlorine content of about 20-60% by weight and a sulfur content of about 0.5-10% by weight; with
b) 0.1-1 equivalent, per equivalent of sulfur present in the chlorosulfonated olefin polymer, of a compound selected from the group consisting of primary amines, secondary amines, monofunctional alcohols, and mixtures thereof; and
2) further contacting the resultant derivative with;
c) a compound selected from the group consisting of polyols, polyamines, and mixtures thereof, wherein the equivalent ratio of the compound to sulfur present in the chlorosulfonated olefin polymer is from 0.1:1 to 1:1 and the compound has an equivalent weight up to about 1,000;

with the proviso that when c) is a polyol alone, 0.1-2 equivalents, per equivalent of sulfur present in the chlorosulfonated olefin polymer, of a tertiary amine is additionally present.

5. The process of Claim 4 wherein c) is a polyamine or a polyol/polyamine mixture and 0.1-2 equivalents, per equivalent of sulfur present in the chlorosulfonated olefin polymer, of a tertiary amine is additionally present.

6. A cured chlorosulfonated olefin polymer composition comprising the reaction product of:

   a) a chlorosulfonated olefin polymer having a chlorine content of about 20-60% by weight and a sulfur content of 0.5-10% by weight; and

   b) a compound selected from the group consisting of polyols, polyamines, and mixtures thereof, wherein the equivalent ratio of the compound to sulfur present in the chlorosulfonated olefin polymer is from 0.1:1 to 1:1, and the compound has an equivalent weight up to 1,000;

7. The cured chlorosulfonated olefin polymer composition of Claim 6, wherein the chlorosulfonated olefin polymer is selected from the group consisting of chlorosulfonated homopolymers of $C_2$-$C_8$ alpha monoolefins and chlorosulfonated copolymers of ethylene and at least one ethylenically unsaturated monomer selected from the group consisting of $C_3$-$C_{10}$ alpha monoolefins, $C_1$-$C_{12}$ alkyl esters of unsaturated $C_3$-$C_{20}$ monocarboxylic acids, unsaturated $C_3$-$C_{20}$ mono- or dicarboxylic acids, vinyl esters of saturated $C_2$-$C_{18}$ carboxylic acids, and carbon monoxide.

8. The cured chlorosulfonated olefin polymer composition of Claim 6, wherein the chlorosulfonated olefin polymer is selected from the group consisting of chlorosulfonated polyethylene, chlorosulfonated polypropylene, chlorosulfonated ethylene vinyl acetate copolymers, chlorosulfonated ethylene acrylic acid copolymers, chlorosulfonated ethylene methacrylic acid copolymers, chlorosulfonated ethylene methyl acrylate copolymers, chlorosulfonated ethylene methyl methacrylate copolymers, chlorosulfonated ethylene n-butyl methacrylate copolymers, chlorosulfonated ethylene glycidyl methacrylate copolymers; and chlorosulfonated copolymers of ethylene with propylene, butene, 3-methyl-1-pentene or octene.

9. The cured chlorosulfonated olefin polymer composition of Claim 6 wherein the chlorosulfonated olefin polymer is chlorosulfonated polyethylene.

10. The cured chlorosulfonated olefin polymer composition of any one of Claims 6 to 9, wherein the chlorosulfonated olefin polymer has a chlorine content of about 30-50% and a sulfur content of about 1-3%.

11. The cured chlorosulfonated olefin polymer composition of any one of Claims 6 to 10, wherein the chlorosulfonated olefin polymer has a weight average molecular weight of 1,000 to 200,000.

12. The cured chlorosulfonated olefin polymer composition of any one of Claims 6 to 11 wherein the polyol is selected from the group consisting of monomeric polyols, polyester polyols, polyether polyols, polyacrylic polyols, and mixtures thereof.

13. The cured chlorosulfonated olefin polymer composition of Claim 12, wherein the equivalent weight of the polyol is less than 500.

14. The cured chlorosulfonated olefin polymer composition of any one of Claims 6 to 11 wherein the polyamine is isophoronediamine.

15. The cured chlorosulfonated olefin polymer composition of any one of Claims 6 to 11 wherein the polyamine is the reaction product of an aliphatic or aromatic amine having two or more primary or secondary amino functionalities per molecule with a compound selected from the group consisting of a aliphatic polycarboxylic acids, cycloaliphatic polycarboxylic acids, and aromatic polycarboxylic acids.